# FASCICULE DE BREVET EUROPEEN

(11) **EP 1 446 298 B1**
(45) Date de publication et mention de la délivrance du brevet: **02.01.2008**
(21) Numéro de dépôt: 02796865.0
(22) Date de dépôt: 22.11.2002
(51) Int. Cl.: B60H 1/00, B60H 1/32

(54) **SYSTEME DE REGULATION THERMIQUE A ABSORPTION POUR VEHICULE ELECTRIQUE**
ABSORPTIONSTEMPERATURREGELSYSTEM FÜR ELEKTROFAHRZEUG
ABSORPTION TEMPERATURE CONTROL SYSTEM FOR ELECTRIC VEHICLE

(30) Priorité: 23.11.2001 FR 0115186
(43) Date de publication de la demande: 18.08.2004
(73) Titulaire: RENAULT S.A.S., 92100 Boulogne Billancourt (FR)
(72) Inventeur: OLIVIER, Gérard, F-78380 Bougival (FR); OULEFKI, Abdelhakim, F-93000 Aubervilliers (FR); SAMUEL, Sébastien, F-75004 Paris (FR)
(86) Numéro de dépôt international: PCT/FR2002/004015
(87) Numéro de publication internationale: WO 2003/043841

(56) Documents cités:
- EP-A- 0 999 078
- FR-A- 2 792 259
- US-A- 4 307 575
- US-A- 6 148 629

## Description

La présente invention a pour objet un système de régulation thermique particulièrement adapté à un véhicule automobile à propulsion électrique équipé d'un dispositif de pile à combustible.

Les piles à combustible qui permettent la combustion directe de l'énergie libre d'une réaction chimique d'oxydo-réduction en énergie électrique, apparaissent comme une technologie prometteuse dans le domaine de l'automobile pour répondre aux exigences de réduction de la pollution et de la consommation. Les piles à combustible utilisant des membranes échangeuses de protons semblent particulièrement adaptées pour cette application car elles acceptent l'utilisation d'un combustible et fonctionnent à des températures entre 20 et 150°C.

L'utilisation de ces piles à combustible pour alimenter en courant électrique un dispositif de propulsion de véhicule automobile présente cependant des difficultés tenant notamment aux exigences de refroidissement plus complexes que dans le cas d'un véhicule équipé d'un moteur à combustion interne. En effet, la puissance thermique à évacuer est environ double de celle d'un véhicule équipé d'un moteur à combustion interne. De plus, les niveaux de température des organes à refroidir sont hétérogènes, certains organes n'admettant pas des températures supérieures à 55°C alors que d'autres peuvent être portés à 120°C et même à plusieurs centaines de degrés Celsius, dans le cas du reformeur par exemple.

L'utilisation de systèmes de refroidissement de type classique comprenant des compresseurs, pompes, etc., dans des circuits de fluide de refroidissement, entraîne une nouvelle consommation d'énergie électrique, ces organes nécessitant eux aussi des moyens de refroidissement. L'adjonction de ces organes supplémentaires amène en outre inévitablement une surchauffe du module de puissance comprenant la pile à combustible, le réformeur et l'ensemble des organes auxiliaires, du fait de leur propre consommation. De plus, l'intégration dans le véhicule automobile de tels organes supplémentaires de refroidissement présente des difficultés en raison de leur encombrement.

On connaît l'utilisation de boucles de refroidissement à absorption équipant des véhicules munis d'un moteur à combustion interne. C'est ainsi que la demande de brevet EP 0 350 764 décrit l'utilisation d'une boucle à absorption dont la source chaude est le pot d'échappement du véhicule et qui permet de climatiser l'habitacle.

Dans le brevet US 5 896 747 est décrit un système de refroidissement de l'habitacle d'un véhicule automobile équipé d'un moteur à combustion interne au moyen d'un cycle à absorption. Le bouilleur est installé sur l'eau chaude en sortie du moteur à combustion.

Le brevet US 4 253 310 propose d'utiliser une boucle à absorption pour refroidir le moteur à combustion interne d'un véhicule et éventuellement climatiser ou chauffer l'habitacle.

Par ailleurs, le brevet US 4 307 575 décrit l'utilisation d'une boucle de refroidissement par absorption dans un véhicule équipé d'un moteur électrique. Le bouilleur est constitué de deux parties en série, d'une part le moteur électrique qui est par conséquent refroidi et d'autre part un collecteur solaire placé sur le toit du véhicule.

Aucun de ces dispositifs connus ne prévoit cependant une régulation thermique d'un véhicule électrique alimenté par un dispositif de pile à combustible.

L'application d'un cycle à absorption à des véhicules comportant un moteur à combustion interne utilise les calories récupérées sur les gaz d'échappement ou l'eau de refroidissement du moteur afin de réaliser la compression thermique dans le cycle à absorption.

Les problèmes posés par la réduction de la pollution et de la consommation du véhicule ne sont nullement évoqués dans l'état de la technique. De même les difficultés inhérentes au refroidissement de véhicules équipées de piles à combustible ne sont pas non plus résolues.

La présente invention a pour objet de résoudre ces différents problèmes.

La présente invention a donc pour objet un système de régulation thermique particulièrement adapté à un véhicule automobile à propulsion électrique équipé d'un dispositif de pile à combustible, ne nécessitant qu'une faible consommation d'énergie et de nature à diminuer de ce fait la consommation en même temps que le bruit et l'entretien.

L'invention a également pour objet un système de régulation thermique qui puisse non seulement refroidir la pile à combustible et ses organes auxiliaires, mais puisse également être utilisé pour la climatisation de l'habitacle du véhicule, qu'il s'agisse d'un refroidissement ou d'un chauffage de celui-ci.

Dans un mode de réalisation, le système de régulation thermique pour véhicule automobile à propulsion électrique équipé d'un dispositif de pile à combustible, selon l'invention, comprend une machine frigorifique à absorption utilisant un mélange fluide frigorigène. La machine frigorifique comprend au moins un élément bouilleur associé à une source de chaleur du véhicule, au moins un élément absorbeur, au moins un élément condenseur à haute pression capable d'assurer le chauffage de l'habitacle du véhicule et au moins un élément évaporateur à basse pression, séparé de l'élément condenseur par un moyen détendeur et capable d'assurer le refroidissement d'un organe de propulsion du véhicule et/ou de l'habitacle du véhicule. Le refroidissement de la pile à combustible est assuré en outre par l'énergie frigorifique générée par la machine frigorifique à absorption.

L'utilisation d'un cycle frigorifique à absorption permet d'obtenir une régulation thermique de la pile à combustible ainsi que des organes qui lui sont associés tout en assurant également s'il y a lieu, la climatisation ou le chauffage de l'habitacle du véhicule. Le fonctionnement de l'ensemble est économique, non polluant, silencieux en l'absence d'organes en mouvement. On peut utiliser un mélange frigorigène bon marché tel qu'un mélange d'eau et d'ammoniaque ou tout autre mélange approprié.

La source de chaleur associée à l'élément bouilleur peut être la pile à combustible elle même.

En variante, en particulier lorsque la pile à combustible est alimentée en hydrogène par un élément reformeur de carburant hydrocarboné, la source de chaleur associée à l'élément bouilleur peut avantageusement être le reformeur lui-même.

Dans d'autres modes de réalisation, la source de chaleur associée à l'élément bouilleur peut être une batterie électrique, le moteur électrique de propulsion du véhicule ou les composants électroniques de commande et d'alimentation du moteur électrique.

Lorsque la pile à combustible n'est pas la source de chaleur associée à l'élément bouilleur, la pile à combustible est refroidie par un échangeur de chaleur à basse pression traversé par le fluide frigorigène et dans lequel celui-ci s'évapore partiellement.

Dans un mode de réalisation avantageux, on dispose entre l'élément bouilleur et l'élément absorbeur, un échangeur de chaleur liquide/liquide pour améliorer le rendement thermique de ces deux éléments.

Dans un mode de réalisation, on peut en outre prévoir d'intercaler entre la sortie de vapeur de l'élément évaporateur et l'entrée de vapeur de l'élément condenseur, un circuit supplémentaire de régulation thermique à compression de vapeur comprenant un compresseur et une vanne capable d'inverser le sens de circulation de la vapeur dans ledit circuit supplémentaire.

Une pompe à vide peut être intercalée entre l'élément absorbeur et l'élément bouilleur.

Dans un mode de réalisation avantageux, la machine frigorifique à absorption peut comporter deux étages, une partie du fluide frigorigène vaporisé dans l'élément bouilleur du premier étage alimentant l'élément absorbeur du deuxième étage.

La présente invention sera mieux comprise à l'étude de la description détaillée de quelques modes de réalisation particuliers pris à titre d'exemple nullement limitatif et illustré par les dessins annexés, sur lesquels :
La figure 1 illustre schématiquement les principaux éléments d'un premier mode de réalisation d'un système selon la présente invention;
La figure 2 est vue analogue à la figure 1 d'un deuxième mode de réalisation d'un système selon l'invention;
La figure 3 est vue analogue d'un troisième mode de réalisation d'un système selon l'invention ;
La figure 4 illustre schématiquement un système selon l'invention munie d'une machine frigorifique à absorption à deux étages.

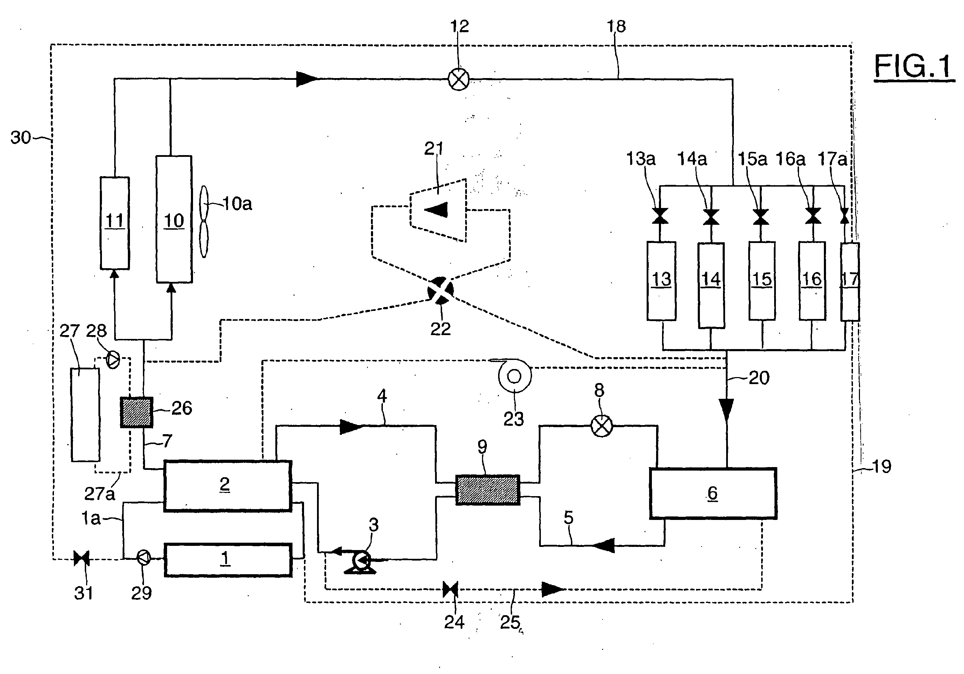

Tel qu'il est illustré sur la figure 1, le système de régulation thermique selon l'invention comprend une pile à combustible 1 utilisée comme source de chaleur d'une machine frigorifique à absorption comprenant un bouilleur 2 chauffé par un fluide caloporteur s'écoulant dans les canalisations la, la nature du fluide caloporteur étant choisie de façon à être compatible avec le fonctionnement de la pile à combustible 1. Un mélange fluide frigorigène constitué par exemple par un mélange d'eau et d'ammoniaque est mis en circulation par une pompe 3 dans un circuit de liquide comprenant les canalisations 4 et 5 et connectant le bouilleur 2 à un absorbeur 6 lequel peut être refroidi par n'importe quel moyen, notamment par circulation d'air extérieur, éventuellement mis en mouvement par un ventilateur non représenté sur la figure. Le mélange du fluide frigorigène tel que l'eau et un solvant tel que l'ammoniaque, circulant dans l'absorbeur 6 produit une solution dite « riche » c'est-à-dire riche en fluide frigorigène. La pompe 3 aspire la solution riche vers le bouilleur 2 par la canalisation 5. Le fluide frigorigène est désorbé dans le bouilleur 2 en produisant des vapeurs du solvant qui s'échappent par la canalisation 7. La solution restante qui est dite « pauvre » c'est-à-dire appauvrie en fluide frigorigène, retourne à l'absorbeur 6 par la canalisation 4 après avoir subi un abaissement de pression au moyen d'un dispositif réducteur de pression 8 de type quelconque. Une augmentation du rendement thermique du fonctionnement du bouilleur 2 et de l'absorbeur 6 peut être obtenue en intercalant un échangeur de chaleur liquide/liquide référencé 9, permettant à la solution riche de se réchauffer et à la solution pauvre de se refroidir. On notera, bien entendu, que la présence de cet échangeur de chaleur 9 n'est pas indispensable.

Les vapeurs de fluide frigorigène issues du bouilleur 2 par la canalisation 7 sont dirigées vers un condenseur 10 et, dans l'exemple illustré, vers un aérotherme 11 qui joue également un rôle de condenseur. Le condenseur 10 associé à un ventilateur 10a au même titre que l'aérotherme 11, peuvent servir par exemple au chauffage de l'habitacle du véhicule. A la sortie du condenseur 10 et de l'aérotherme 11 le fluide frigorigène sous forme liquide à haute pression traverse un dispositif détendeur 12 qui abaisse la pression jusqu'à une pression basse à laquelle le liquide peut alors s'évaporer dans un ensemble d'organes évaporateur 13, 14, 15, 16 et 17 montés en parallèle dans la canalisation 18 et pouvant chacun être isolé par une électrovanne 13a, 14a, 15a, 16a et 17a. Les calories absorbées lors de l'opération d'évaporation permettent le refroidissement de différents organes du véhicule, par exemple le moteur électrique de propulsion constituant l'organe 13, les composants électroniques de commande et d'alimentation du moteur électrique constituant l'organe 14, les batteries électriques d'alimentation constituant l'organe 15 et l'évaporateur de l'habitacle du véhicule constituant l'organe 16 permettant la climatisation de l'habitacle.

L'évaporateur 17 qui peut être relié par la canalisation optionnelle 19 à la pile à combustible 1 peut permettre dans certain cas d'aider au refroidissement de la pile à combustible 1.

À la sortie des différents évaporateurs 13 à 17, le fluide frigorigène est majoritairement ou totalement à l'état gazeux et se dirige par la canalisation 20 dans l'absorbeur 6 où il est absorbé par le solvant en phase liquide s'écoulant dans les canalisations 4 et 5.

On notera que la partie du circuit comprise entre la pompe de circulation 3 et l'organe de détente 12 est sous haute pression. Il en est de même pour la partie du circuit de liquide allant du bouilleur 2 au réducteur de pression 8. En revanche, toute la partie comprise entre le détendeur 12 et la pompe 3 en passant par les différents évaporateurs 13 à 17 est sous basse pression. Il en est de même pour la partie du circuit de liquide comprise entre l'absorbeur 6 et la pompe 3.

Différents éléments supplémentaires optionnels peuvent être ajoutés et ont été représentés, notamment en pointillés, sur la figure 1.

C'est ainsi qu'il est possible de disposer un compresseur 21 entre les différents évaporateurs 13 à 17, d'une part, et les éléments condenseurs 10 et 11, d'autre part. Une vanne d'inversion à quatre voies 22 permet de faire fonctionner la boucle de compression en climatisation ou en pompe à chaleur. Différentes électrovannes non représentées sur la figure permettent d'isoler la boucle de climatisation de compression de vapeur comprenant le compresseur 21 et la vanne 22 du reste du circuit représenté en traits pleins sur la figure 1. Si l'on souhaite refroidir les organes 13 à 17, le fluide frigorigène comprimé dans le compresseur 21 traverse la vanne d'inversion 22 qui le dirige vers les condenseurs 10 et 11. Le liquide traverse ensuite le détendeur 12 avant de revenir sur les évaporateurs 13 à 17 et être ensuite acheminé à travers la vanne d'inversion 22 sur l'entrée du compresseur 21. En revanche si l'on souhaite réchauffer les organes 13 à 17 on fait suivre au fluide frigorigène le circuit suivant : en sortant du compresseur 21, le fluide traverse la vanne d'inversion 22 qui le dirige vers les organes 13 à 17. Le liquide, en sortie des organes 13 à 17, traverse le détendeur 12 pour revenir sur les deux éléments condenseurs 10 et 11 avant de retraverser la vanne d'inversion 22 pour revenir sur l'entrée du compresseur 21.

Dans un mode de réalisation, on peut également prévoir une pompe à vide 23 placée entre l'absorbeur 6 et le bouilleur 2 de façon à créer une dépression plus importante dans l'ensemble des évaporateurs 13 à 17 et augmenter la pression régnant dans le bouilleur 2. La pompe à vide 23 reliée à la sortie des organes évaporateurs 13 à 17 aspire la partie gazeuse du fluide pour augmenter la pression dans le bouilleur 2.

Dans un mode de réalisation, il est possible de prévoir en outre une électrovanne 24 dans une conduite 25 reliant la sortie de la pompe de circulation 3 à l'absorbeur 6. Une partie de la solution riche peut alors être renvoyée vers l'absorbeur 6 à la sortie de la pompe de circulation 3 afin d'effectuer une régulation du circuit de liquide.

Dans une variante également illustrée sur la figure 1, on peut prévoir une source de chaleur complémentaire 26 réalisant une surchauffe des vapeurs frigorigènes issues du bouilleur 2 et intercalée dans la canalisation 7. On peut prévoir de refroidir ainsi un organe 27, qui pourrait par exemple être un reformeur capable d'alimenter en hydrogène la pile à combustible 1, l'organe 27 étant traversé par un fluide caloporteur circulant dans une canalisation 27a et mise en circulation par une pompe 28.

Dans le mode de réalisation illustré sur la figure 1 une partie du fluide de refroidissement traversant la pile à combustible 1 et mise en circulation par la pompe 29 peut traverser l'échangeur de chaleur 17 par la canalisation 30 et à travers l'électrovanne 31. Il en résulte un refroidissement supplémentaire lorsque l'électrovanne 17a est ouverte, le fluide refroidi revenant sur la pile à combustible 1 par la canalisation 19.

D'autres éléments peuvent également être ajoutés en variante. C'est ainsi que l'on peut envisager de rajouter entre le bouilleur 2 et les organes condenseurs 10 et 11 des organes tels qu'un rectificateur ou un déflegmateur afin de renvoyer au bouilleur 2 le solvant qui aurait pu être entraîné avec le fluide frigorigène à la sortie du bouilleur 2. Ces appareils ne sont pas illustrés sur la figure. On pourrait également placer un dispositif de sous-refroidissement entre les organes de condensation 10 et 11 et le détendeur 12, un tel sous-refroidissement provenant par exemple d'une boucle de climatisation à compression de vapeur non illustrée sur la figure.

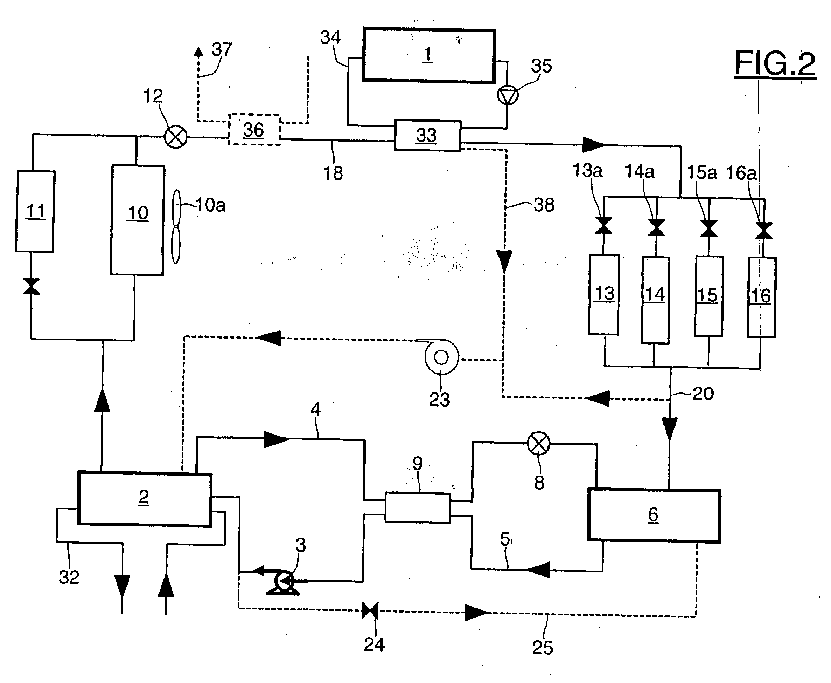

Sur la figure 2 où les références des éléments analogues sont identiques à celles de la figure 1, se trouvent représentés les principaux éléments d'un deuxième mode de réalisation conforme à l'invention.

Dans ce mode de réalisation, le bouilleur 2 reçoit un flux de chaleur provenant d'une source chaude qui n'est pas représentée sur la figure. Le flux de chaleur est transporté par exemple par un fluide caloporteur transitant par les canalisations 32 qui traversent le bouilleur 2. Cette source de chaleur peut par exemple être le reformeur alimentant en hydrogène la pile à combustible 1.

Dont ce mode de réalisation, la pile à combustible 1 est refroidie au moyen d'un échangeur de chaleur 33 monté dans la canalisation 18 en aval du dispositif détendeur 12 c'est-à-dire dans la partie basse pression du circuit, en amont des éléments évaporateurs 13 à 16. Un fluide caloporteur approprié traverse la pile à combustible puis l'échangeur de chaleur 33 dans le circuit 34 et est mis en circulation par une pompe 35.

Un échangeur de chaleur complémentaire 36 peut également être monté dans la canalisation 18 entre le dispositif détendeur 12 et l'échangeur 33 afin de sous-refroidir le fluide frigorigène qui a été détendu par le dispositif détendeur 12. La source de refroidissement non représentée sur la figure pourrait, par exemple, être constituée par une boucle de climatisation de type classique équipant lé véhicule. Le fluide frigorigène transite par les canalisations 37 et se vaporise partiellement dans l'échangeur 36.

Dans le mode de réalisation illustré sur la figure 2 on a prévu, en outre, comme sur la figure 1, et à titre optionnel, une pompe à vide 23 intercalée entre l'absorbeur 6 et le bouilleur 2. La pompe à vide 23 peut également être reliée par la conduite 38 à l'échangeur 33 de façon à aspirer les vapeurs produites dans l'échangeur 33 qui se comporte comme un évaporateur.

Pour le reste, le mode de fonctionnement du dispositif illustré sur la figure 2 est identique à celui de la figure 1. La solution riche provenant de l'absorbeur 6 est chauffée dans le bouilleur 2 de façon à désorber le fluide frigorigène qu'elle contient. Le fluide frigorigène vaporisé se dirige vers les organes de condensation 10 et 11, ce dernier pouvant être isolé par une électrovanne et pouvant être constitué par l' aérotherme servant au chauffage de l'habitacle. En sortant des organes de condensation 10 et 11, le fluide frigorigène qui se trouve à l'état liquide à haute pression est détendu dans l'organe détenteur 12. Le fluide frigorigène est ensuite partiellement évaporé dans l'échangeur 33 puis complètement évaporé dans l'ensemble des éléments évaporateurs 13 à 16. Une fois évaporé, le fluide frigorigène est dirigé vers l'absorbeur 6 par la conduite 20 pour être absorbé par le fluide solvant. La solution riche du mélange binaire se trouvant dans l'absorbeur 6 est véhiculée en direction du bouilleur 2 au moyen de la pompe de circulation 3. Le bouilleur 2 permet de désorber le fluide frigorigène tandis que le fluide solvant ou mélange pauvre retourne vers l'absorbeur 6 après avoir traversé le dispositif réducteur de pression 8.

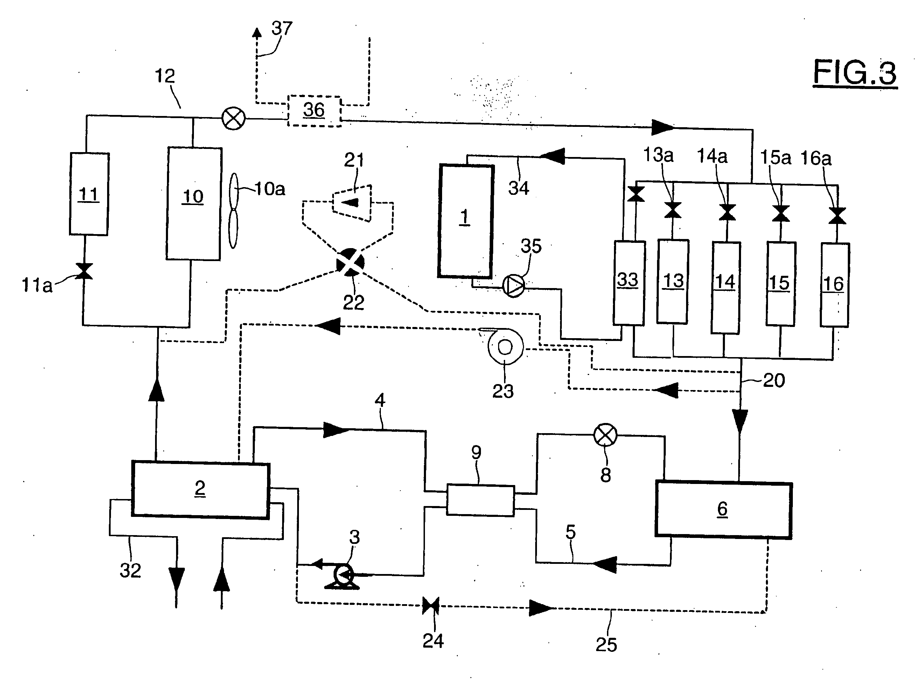

Sur la figure 3, sur laquelle les éléments analogues portent les mêmes références, on a représenté une variante, dans laquelle l'échangeur de chaleur 33 est monté en parallèle des éléments évaporateurs 13 à 16. De plus, et comme dans le mode de réalisation illustré sur la figure 1, un compresseur 21 et une vanne d'inversion 22 ont été montés entre la sortie des éléments évaporateurs montés en parallèle 13 à 16 et 33 d'une part et l'entrée des éléments condenseurs 10 et 11 d'autre part. À part cette différence, le système illustré sur la figure 3 est identique à celui illustré sur la figure 2.

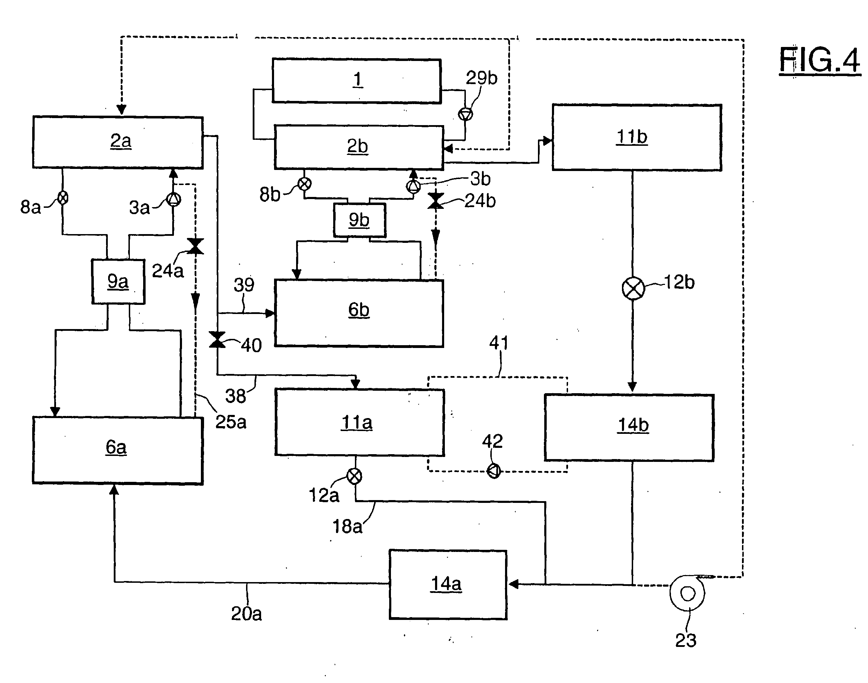

La figure 4 illustre un mode de réalisation dans lequel la machine frigorifique à absorption comporte deux étages. Le premier étage ou étage à basse pression, comprend le bouilleur 2a associé à l'absorbeur 6a. La solution riche issue de l'absorbeur 6a traverse l'échangeur 9a et est mise en circulation par la pompe de circulation 3a. Le bouilleur 2a peut être associé à diverses sources chaudes qui peuvent être par exemple, les batteries électriques d'alimentation, le moteur électrique de propulsion du véhicule ou encore les composants électroniques de commande d'alimentation du moteur électrique. La solution riche libère le fluide frigorigène dans les différents organes constituant le bouilleur 2a. Le solvant ou solution pauvre retourne dans l'absorbeur 6a après avoir subi une réduction de pression dans l'organe détenteur 8a. Une partie de la solution riche peut également retourner par la conduite 25a dans l'absorbeur 6a, le débit étant contrôlé par la vanne 24a. Le premier étage d'absorption est complété par un organe de condenseur 11a qui peut par exemple réaliser le chauffage de l'habitacle. La partie du fluide frigorigène sortant du condenseur 11a à l'état majoritairement où totalement liquide, subit une réduction de pression en traversant le dispositif détendeur 12a. Le fluide à pression réduite est alors amené par la canalisation 18a sur l'évaporateur 14a. La phase vapeur obtenue étant ramenée par la canalisation 20a sur l'absorbeur 6a. Les différents organes constituant ce premier étage d'absorption sont identiques à ceux de la machine frigorifique à absorption illustrée sur les figures précédentes, les organes analogues portant les mêmes références affectées de la lettre "a".

Le deuxième étage d'absorption dans lequel les organes analogues portent les mêmes références affectées de la lettre « b », comprend le bouilleur 2b associé à la pile à combustible 1 de façon à refroidir celle-ci. Le bouilleur 2b désorbe le fluide frigorigène. Le solvant ou solution pauvre en fluide frigorigène retourne sur un deuxième absorbeur 6b après avoir été détendu par l'organe détenteur 8b et avoir traversé l'échangeur 9b. Une pompe de circulation 3b est montée dans le circuit. De plus une partie de la solution riche peut revenir par la conduite 25b vers l'absorbeur 6b, le débit étant contrôlé par la vanne 24b. Le deuxième étage d'absorption est complété par l'organe condenseur 11b relié par intermédiaire du dispositif détendeur 12b à un élément évaporateur 14b. La sortie de l'élément évaporateur 14b est connectée à l'entrée de l'élément évaporateur 14a du premier étage d'absorption. Une pompe à vide 23 peut également être intercalée entre la sortie des évaporateurs 14a et 14b d'une part, et les bouilleurs 2a et 2b d'autre part, de façon à augmenter la pression dans ceux-ci comme c'était le cas dans le mode de réalisation des figures 1 et 3.

Le fluide frigorigène provenant du bouilleur 2a du premier étage d'absorption est dirigé en partie sur le condenseur 11a du premier étage d'absorption par la conduite 38 et en partie vers l'absorbeur 6b du deuxième étage d'absorption par la conduite 39, la vanne 40 permettant de réguler les proportions.

Dans le système illustré sur la figure 4, on peut distinguer trois niveaux de pression. Les évaporateurs 14a et 14b au même titre que l'absorbeur 6a sont soumis à une basse pression. Le bouilleur 2a du premier étage ainsi que l'absorbeur 6b du deuxième étage comme le condenseur 11a du premier étage, sont soumis à une pression moyenne. Enfin le bouilleur 2b et le condenseur 11b du deuxième étage sont soumis à la haute pression.

Dans une variante, illustrée également sur figure 4, une communication est établie par les conduites 41 et la pompe de circulation 42 entre l'évaporateur 14b du deuxième étage et le condenseur 11a du premier étage.

On notera que le bouilleur 2a peut être constitué d'une batterie d'organes se comportant chacun comme un bouilleur. Plusieurs de ces organes peuvent être montés en parallèle et permettre le refroidissement des batteries électriques du véhicule, du moteur électrique de propulsion ou encore des composants électroniques d'alimentation et de commande. Des électrovannes peuvent chaque fois être prévues afin de régler les débits dans les différents organes bouilleur de façon à adapter les besoins de refroidissement aux circonstances particulières.

On comprendra que dans tous les modes de réalisation illustrés, on puisse utiliser les différentes variantes qui ont été mentionnées en relation avec l'un des modes de réalisation particulier décrits.

## Revendications

1. Système de régulation thermique pour un véhicule automobile à propulsion électrique comprenant une machine frigorifique à absorption utilisant un mélange fluide frigorigène, comportant au moins un élément bouilleur (2) associé à une source de chaleur du véhicule, au moins un élément absorbeur (6), au moins un élément condenseur (10) à haute pression capable d'assurer le chauffage de l'habitacle du véhicule et au mois un élément évaporateur (13 à 16) à basse pression, séparé de l'élément condenseur par un moyen détendeur (12) et capable d'assurer le refroidissement d'un organe de propulsion du véhicule et/ou de l'habitacle du véhicule, **caractérisé en ce que** ledit véhicule est équipé d'une pile à combustible (1), et **en ce que** le refroidissement de ladite pile à combustible (1) est assuré par l'énergie frigorifique générée par la machine frigorifique à absorption.

2. Système selon la revendication 1 **caractérisé par le fait que** la source de chaleur associée à l'élément bouilleur est la pile à combustible.

3. Système selon la revendication 1 dans lequel la pile à combustible est alimentée en hydrogène par un élément reformeur de carburant hydrocarboné, **caractérisé par le fait que** la source de chaleur associée à l'élément bouilleur est le reformeur.

4. Système selon la revendication 1 **caractérisé par le fait que** la source de chaleur associée à l'élément bouilleur est une batterie électrique, le moteur électrique de propulsion du véhicule ou les composants électroniques de commande et d'alimentation du moteur électrique.

5. Système selon la revendication 1 **caractérisé par le fait que** la pile à combustible (1) est refroidie par un échangeur de chaleur (33) à basse pression traversé par le fluide frigorigène et dans lequel celui-ci s'évapore partiellement.

6. Système selon l'une quelconque des revendications précédentes **caractérisé par le fait qu'**entre l'élément bouilleur (2) et l'élément absorbeur (6) est intercalé un échangeur de chaleur liquide/liquide (9).

7. Système selon l'une quelconque des revendications précédentes **caractérisé par le fait qu'**entre la sortie de vapeur de l'élément évaporateur (13 à 16) et l'entrée de vapeur de l'élément condenseur (10), est intercalé un circuit supplémentaire de régulation thermique à compression de vapeur comprenant un compresseur (21) et une vanne (22) capable d'inverser le sens de circulation de la vapeur dans ledit circuit supplémentaire.

8. Système selon l'une quelconque des revendications précédentes **caractérisé par le fait qu'**une pompe à vide (23) est intercalée entre l'élément absorbeur (6) et l'élément bouilleur (2).

9. Système selon l'une quelconque des revendications précédentes **caractérisé par le fait que** la machine frigorifique à absorption comporte deux étages, une partie du fluide frigorigène vaporisé dans l'élément bouilleur (2a) du premier étage alimentant l'élément absorbeur (6b) du deuxième étage.

## Claims

1. Temperature control system for an electrically-driven motor vehicle, comprising an absorption refrigerating machine using a refrigerant liquid mixture, comprising at least one boiler element (2) associated with a heat source of the vehicle, at least one absorbing element (6), at least one high-pressure condensing element (10) capable of providing the heating of the vehicle passenger compartment and at least one low-pressure evaporating element (13 to 16), separated from the condensing element by an expanding element (12) and capable of providing the cooling of a driving member of the vehicle and/or the vehicle passenger compartment, **characterized in that** said vehicle is provided with a fuel cell (1) and **in that** the cooling of said fuel cell (1) is provided by the refrigerating energy generated by the absorption refrigerating machine.

2. System according to Claim 1, **characterized in that** the heat source associated with the boiler element is the fuel cell.

3. System according to Claim 1 in which the fuel cell is supplied with hydrogen by a hydrocarbon fuel reformer element, **characterized in that** the heat source associated with the boiler element is the reformer.

4. System according to Claim 1, **characterized in that** the heat source associated with the boiler element is an electric battery, the electric driving motor of the vehicle or the electronic components for controlling and supplying power to the electric motor.

5. System according to Claim 1, **characterized in that** the fuel cell (1) is cooled by a low-pressure heat exchanger (33) through which the refrigerant liquid passes and in which said refrigerant liquid partially evaporates.

6. System according to any one of the preceding claims, **characterized in that** a liquid/liquid heat exchanger (9) is interposed between the boiler element (2) and the absorbing element (6).

7. System according to any one of the preceding claims, **characterized in that** an additional vapour compression circuit for temperature control, comprising a compressor (21) and a valve (22) capable of reversing the direction of circulation of the vapour in said additional circuit, is interposed between the vapour outlet of the evaporating element (13 to 16) and the vapour inlet of the condensing element (10).

8. System according to any one of the preceding claims, **characterized in that** a vacuum pump (23) is interposed between the absorbing element (6) and the boiler element (2).

9. System according to any one of the preceding claims, **characterized in that** the absorption refrigerating machine comprises two stages, one portion of the refrigerant liquid evaporated in the boiler element (2a) of the first stage supplying the absorbing element (6b) of the second stage.

## Patentansprüche

1. Wärmeregulationssystem für ein Kraftfahrzeug mit elektrischem Antrieb, das eine Kältemittelmischung verwendende Absorptionskältemaschine aufweist, das mindestens ein Desorberelement (2), das einer Wärmequelle des Fahrzeugs zugeordnet ist, mindestens ein Absorberelement (6), mindestens ein Hochdruckkondensatorelement (10), das fähig ist, die Heizung des Fahrzeuginnenraums zu gewährleisten, und mindestens ein Niederdruck-Verdampferelement (13 bis 16) aufweist, das vom Kondensatorelement durch ein Druckreglermittel (12) getrennt und fähig ist, die Kühlung eines Antriebsorgans des Fahrzeugs und/oder des Fahrzeuginnenraums zu gewährleisten, **dadurch gekennzeichnet, dass** das Fahrzeug mit einer Brennstoffzelle (1) ausgestattet ist, und dass die Kühlung der Brennstoffzelle (1) durch die Kälteenergie gewährleistet wird, die von der Absorptionskältemaschine erzeugt wird.

2. System nach Anspruch 1, **dadurch gekennzeichnet, dass** die dem Desorberelement zugeordnete Wärmequelle die Brennstoffzelle ist.

3. System nach Anspruch 1, bei dem die Brennstoffzelle von einem Reformerelement für mit Kohlenwasserstoff versetzten Brennstoff mit Wasserstoff versorgt wird, **dadurch gekennzeichnet, dass** die dem Desorberelement zugeordnete Wärmequelle der Reformer ist.

4. System nach Anspruch 1, **dadurch gekennzeichnet, dass** die dem Desorberelement zugeordnete Wärmequelle eine elektrische Batterie, der elektrische Antriebsmotor des Fahrzeugs oder die elektronischen Bauteile zur Steuerung und Versorgung des Elektromotors ist.

5. System nach Anspruch 1, **dadurch gekennzeichnet, dass** die Brennstoffzelle (1) von einem Niederdruck-Wärmetauscher (33) gekühlt wird, der von dem Kühlmittel durchquert wird und in dem dieses teilweise verdampft.

6. System nach einem der vorhergehenden Ansprüche, **dadurch gekennzeichnet, dass** zwischen das Desorberelement (2) und das Absorberelement (6) ein Flüssig/Flüssig-Wärmetauscher (9) eingefügt ist.

7. System nach einem der vorhergehenden Ansprüche, **dadurch gekennzeichnet, dass** zwischen den Dampfausgang des Verdampfungselements (13 bis 16) und den Dampfeingang des Kondensatorelements (10) ein zusätzlicher Wärmeregulationskreislauf mit Dampfkompression eingefügt ist, der einen Kompressor (21) und ein Ventil (22) aufweist, das fähig ist, die Strömungsrichtung des Dampfs im zusätzlichen Kreislauf umzukehren.

8. System nach einem der vorhergehenden Ansprüche, **dadurch gekennzeichnet, dass** eine Vakuumpumpe (23) zwischen das Absorberelement (6) und das Desorberelement (2) eingefügt ist.

9. System nach einem der vorhergehenden Ansprüche, **dadurch gekennzeichnet, dass** die Absorptionskältemaschine zwei Stufen aufweist, wobei ein Teil des im Desorberelement (2a) der ersten Stufe verdampften Kühlmittels das Absorberelement (6b) der zweiten Stufe versorgt.
